# EUROPEAN PATENT APPLICATION

(11) **EP 1 615 345 A1**
(43) Date of publication of application: **11.01.2006**
(21) Application number: 04016134.1
(22) Date of filing: 08.07.2004
(51) Int. Cl.: H04B 1/04, H04B 1/18, H03H 7/38

(54) **Antenna impedance shifter**

(71) Applicant: Sony Ericsson Mobile Communications AB, 221 88 Lund (SE)
(72) Inventor: Wingren, Gustav, 224 68 Lund (SE)
(74) Representative: Körber, Martin Hans

(57) **Abstract**

An electronic equipment (1) for wireless communication is presented, which contains an antenna (2) for emitting and receiving electromagnetic radiation, a control circuitry (5) for determining a current use mode of the electronic equipment (1) and for to provide a control signal related to the use mode determined. The electronic equipment (1) further contains an impedance matching circuitry (3) that is connected to the antenna (2) and that has an impedance, which is subject to the control signal. A method for matching the output impedance of an RF-circuitry (4) to an impedance of an antenna (2) is further disclosed, which comprises steps for determining a current use mode of an electronic equipment (1) housing the antenna (2), generating a control signal related to the current use mode detected, and modifying the impedance of the impedance matching circuitry (3) based on the control signal.

## Description

### TECHNICAL FIELD OF THE INVENTION

The present invention relates to an electronic equipment for wireless communication, and in particular to an impedance matching of a radio frequency circuitry to an antenna of a respective equipment.

### DESCRIPTION OF RELATED ART

Today's electronic equipment for wireless communication like e.g. portable radio communication equipment such as mobile telephones, pagers, or communicators like for instance electronic organisers, smartphones, PDA's (Personal Digital Assistant) or other wireless communication appliances alike, have the radio frequency (RF-) - circuitry and the antenna optimised for one use mode only. The term use mode characterises a certain operation condition of the equipment qualifying it for a distinct category of usage, i.e. for a certain way of being used.

The according category of usage typically corresponds to the main purpose for which the respective radio communication equipment, which is herein after also referred to as a mobile radio terminal, is designed. When the mobile radio terminal is formed by a mobile telephone, the main purpose of the appliance is to make a call, so that the antenna and the preceding RF-circuitry are usefully optimised for being held against a users ear. Handheld devices however, are preferably optimised for being held in a users hand, while the optimisation for a portable computer will most probably be oriented on a free space condition.

The performance of a RF-antenna is affected by its surroundings to a high degree. An antenna optimised for a certain surroundings shows a different gain and VSWR (Voltage Standing Wave Ratio) in a different surroundings with a degraded performance, i.e. in a shorter possible communication range. In other words, if the antenna is e.g. optimised for a certain mode of use as for instance making a call, the antenna performance will be worse in a different use mode like for instance in stand-by mode when the mobile radio terminal is put in a pocket or left on a desk.

It is therefore an object of the present invention to provide an electronic equipment for wireless communication where the antenna performance is optimised for more than one different surroundings.

### SUMMARY

The invention is achieved by an electronic equipment for wireless communication and a method for adapting the output impedance of an RF-circuitry to an impedance of an antenna, both as set out in the appended claims.

The electronic equipment for wireless communication according to the present invention comprises an antenna for emitting and receiving electromagnetic radiation, a control circuitry for determining a current use mode of the electronic equipment and for providing a control signal related to the use mode determined. The electronic equipment further contains an impedance matching circuitry that is connected to the antenna and that has an impedance, which depends on the control signal.

The present invention further comprises a method for matching the output impedance of an RF-circuitry to an impedance of an antenna with steps for determining a current use mode of an electronic equipment comprising the antenna, generating a control signal related to the current use mode detected, and modifying the impedance of the impedance matching circuitry based on the control signal.

The present invention improves the performance of an antenna as part of an electronic equipment for wireless communication in a very uncomplicated and cost-effective way. The performance improvement results in a generally better coverage together with an enhanced reliability of the set-up connections.

Further developments are set forth in the dependent claims.

By implementing the electronic equipment in form of a mobile radio terminal, the better coverage and enhanced connection reliability is effectively also achieved for cellular radio networks.

The impedance matching circuitry comprises preferably a circuit component with an electrically controllable impedance that affects the output impedance of the impedance matching circuitry, thus enabling a direct conversion of the control signal into an impedance match. For a simple circuit design the circuit component with an electrically controllable impedance is formed for example by a PIN diode. The reactance of the impedance matching circuitry is preferably formed by capacitive and/or inductive circuit elements.

Particularly for determining the relative positions of parts of the electronic equipment, which are subject to rotation, pivoting or displacement, the control circuitry preferably comprises a position sensing device for sensing at least one position of a mechanically movable part of the electronic equipment. Unintentional activation of the position sensor is advantageously avoided by using a touchfree position sensor, particularly when a hall generator is used as part of the position sensor. The use mode of the electronic equipment is further advantageously determined by the control circuitry comprising an operation mode sensing device for sensing at least one operation mode of the electronic equipment.

A cost-effective realisation of the control circuitry is achieved by implementing at least part of the control circuitry in form of an Application Specific Integrated Circuit (ASIC). For an effective impedance matching, the impedance matching circuitry is arranged between a RF-circuitry and the antenna, whereby the output of the RF-circuitry is preferably formed by an antenna switch.

The determining of a current use mode is advantageously derived from a reading of at least one sensor, which is adapted to sense an operational condition of the electronic equipment distinct to others, since this enhances the determination of a current use mode by considering also certain procedures carried out on the equipment. The use mode detection is preferably based on standardised modes of using the electronic equipment. Hereto, advantageously a first use mode related to a stand-by mode and/or a second use mode representing a call mode and/or a third use mode for a transfer of non-speech data are defined.

### BRIEF DESCRIPTION OF THE DRAWINGS

In the following description, the present invention is explained in more detail with respect to special embodiments and in relation to the enclosed drawings, in which
- Figure 1: shows a block diagram of an electronic equipment according to the present invention, and
- Figure 2: shows a method according to the present invention in a flowchart representation.

### DETAILED DESCRIPTION OF EMBODIMENT

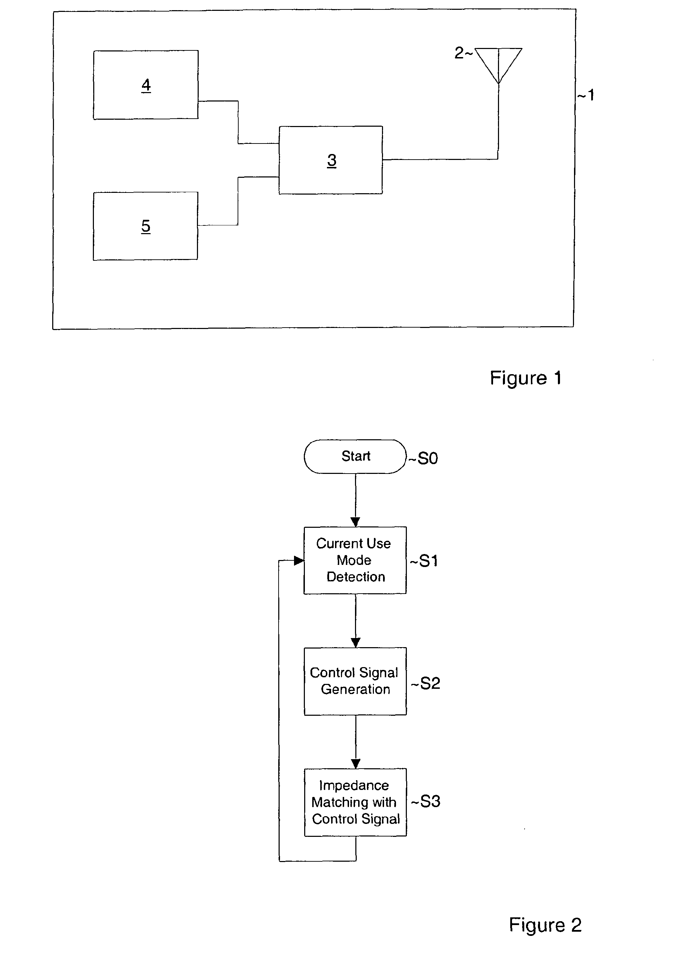

A mobile radio terminal 1 according to the present invention is shown in Fig. 1. It comprises an impedance matching circuit 3 placed between the radio frequency circuitry 4 and an antenna 2. It should be noted that the terms 'comprises' and 'comprising' when used in this specification are taken to specify the presence of stated features, integers, steps or components, but do not preclude the presence or addition of one or more other features, integers, steps, components or groups thereof. The impedance matching circuit 3 operates as an impedance converter for matching the output impedance of the RF-circuitry 4 to the impedance at the connecting point of the antenna 2.

The electronic equipment 1 further comprises a control unit 5 that is adapted to monitor or detect a current use mode of the apparatus 1 and to provide one or more control signals, which is suited to modify the impedance of the impedance matching circuitry 3. The control signal is related to the currently active use mode in order to effect an impedance modification that reflects the current use mode of the electronic equipment 1.

The actual implementation of the RF-circuitry 4 depends on the purpose for which the mobile radio terminal 1 is designed. It may be a transmitter for instance, a receiver or, most commonly a transceiver. In the latter case, the output of the transceiver usually contains an antenna switch for alternately connecting the antenna circuit to either the transmitter part or the receiver part of the transceiver depending on if the mobile radio terminal 1 is in uplink or in downlink mode.

The impedance matching circuitry 3 is preferably implemented as a variable matching network that comprises one or more components with an electrically controllable impedance. For modifying the impedance of the variable matching network, an appropriate control signal is applied to the respective component or components, which enables to operate the impedance matching circuitry 3 as a controllable impedance converter.

An optimum antenna performance is achieved by tuning the variable matching network 3 to match the output impedance of the RF-circuitry 4 to the impedance at the connecting point of the antenna 2. A change in the surroundings of an antenna leads to a mismatch of a previously matched antenna resulting in a performance drop. Although the surroundings of an antenna can usually not be predicted, they are most of the times very similar for a given use mode of the appliance 1. At least as far as the impact of the surroundings on the antenna impedance is concerned, the surroundings are basically reproduced each time the mobile radio terminal 1 is used in the same mode.

When a person uses e.g. a mobile telephone for making a call, the auricle of the mobile phone is placed at the users ear with the opposite face of the phone being at least partly covered by the hand of the person. The impact of this posture on the antenna impedance is basically always the same, irrespective which person makes the call and if the mobile phone is pressed against the left or the right ear. The same applies to a mobile phone being operated e.g. in hands-free mode or in stand-by mode, where it is often kept on a desk or in a pocket, respectively.

The use mode of a mobile radio terminal 1 can be deduced from an actual state of one or more of its components. Some mobile radio terminals provide mechanical gadgets like for instance a clam shell or a sliding mechanism to protect it from unintentional actuation. Others use a keypad interlock instead, which is locked and unlocked by pressing one or more keys of the pad. If the clam shell or sliding mechanism is in closed mode or the keypad interlocked, the mobile radio terminal is usually not in the talking position, i.e. it is not used to make a call in the hands-on mode. The talking position may e.g. be identified by the clam of a clam shell type mobile radio terminal being in the open position and a call connected to the terminal.

In a preferred embodiment of the present invention, an impedance matching is provided for at least three discernible operational conditions of a mobile radio terminal, the stand-by mode, the call mode, and the transfer of non-speech data mode. In the stand-by mode it is assumed, that the user does not directly carry out an operation on the appliance. The term 'stand-by' is therefore used in this specification in a broader sense than usual as it also includes activities on the mobile radio terminal like for instance a data transfer or the like, which are carried out without direct interaction of a user although possibly initiated previously by him or her in one of the other two modes. The call mode is characterised by the radio terminal being in a mode in which a communication link for the transfer of speech data is established.

The transfer on non-speech data mode is a mode in which the radio terminal has established a communication link for the transfer of non-speech data only. Hereby, in the call mode as well as in the transfer of non-speech data mode the control unit 5 can additionally detect if the radio terminal is currently transmitting or receiving data. The radio terminal can additi8onally detect further use modes, e.g. an accessory mode in which the presence or connection of an accessory device is detected, or an antenna impedance change mode, in which a change in the antenna impedance is detected. Further suitable modes can also be detected.

For a mobile clam shell radio terminal the stand-by mode is given for the clam closed and the operational mode is given for the clam being open. In the talking mode, the clam is usually open and a call connection is established. The relative position of the clam with respect to the main body of the mobile radio terminal can be detected by electromechanical devices like a position switch or by electronically operating sensors. Preferably a touchfree position sensor like e.g. a hall sensor in combination with a magnet is used, as a respective device is already present in many clam shell type mobile phones. The relative position of individual parts of the body of a mobile radio terminal having a sliding mechanism or a flap or the like can be determined likewise.

Operational states of a mobile radio terminal 1 are usually available from at least one of its operation control circuits and are monitored by the control unit 5 together with a possible reading from a position detector that reflects a relative position of a sub-module on the mobile 1. The control unit 5 is preferably implemented in form of an Application Specific Integrated Circuit (ASIC), since this type of microchip enables an effective circuit design by using common functions from a library. The control unit 5 processes the signals from the position detector devices and/or the operation control circuits received at its input. The input signal or the combination of the input signals reflects the current use mode of the mobile radio terminal, so that the processing of the signal or signals yields a control signal that is related to the current of its use modes. The control signal is supplied to the impedance matching circuitry 3 for modifying its impedance such, that the output of the RF-circuitry 4 is matched to the impedance of the antenna 2 expected for the current use mode.

In a preferred embodiment of the present invention, the matching network 3 is formed by a circuit containing passive inductive and capacitive devices in combination with one or more active devices having a bias controllable reactance. The passive devices may be either formed by discrete devices or by distributed devices like e.g. micro strip structures or the like, or by a combination of discrete and distributed devices. The impedance, i.e. the output impedance of the matching network 3 is controlled by the biases applied to the active devices. The control signal from the control circuit 5 is therefore preferably formed by one or more voltages, each acting as a bias for one or a group of active devices.

Each use mode determined corresponds to a particular standardised situation for which a definite antenna impedance, i.e. the impedance at the connecting point of the antenna 2 is to be expected. Therefore also the impedance of the matching network required for each of the defined standard use modes corresponds to a pre-set standard value. The optimisation of the antenna circuitry is thus reduced to an alteration between different pre-tuned impedance matches effected by the control circuitry 5 through means of one or more biases forming a control signal. This can for instance be achieved by implementing the control circuit in form of a logic circuit providing the control signal from a logical operation applied to the input signals or by a circuit having a processor and a storage means that uses a table structure to relate each possible input signal state to its related control signal.

The flowchart of Fig. 2 shows the basic steps of a method according to the present invention for a use mode dependent impedance matching procedure. When started in step S0 by for instance turning on the appliance 1, the procedure first checks the current use mode of the mobile radio terminal 1 in step S 1. The current use mode is determined by judging readings or signals that indicate the actual state of selected components like e.g. a position sensor or an operation control circuit or device, respectively. In the following step S2, a control signal is generated based on the use mode detected. The respective control signal is finally used in step S3 for matching the impedance of the matching network 3 to the antenna impedance. The procedure then returns to step S 1 to check if the mobile radio terminal is operated in a different use mode. If so, the control signal generation according to step S2 and the impedance matching according to step S3 are passed through again to adjust the impedance matching to the new situation before the procedure returns again to the use mode monitoring of step S1.

By pre-defining a number of antenna impedance matches for standardised use modes of a mobile radio terminal, a cost-effective optimisation of the antenna performance is achieved resulting in a better total coverage with less calls dropped or radio connections lost.

## Claims

1. An electronic equipment for wireless communication comprising an
- antenna (2) for emitting and receiving electromagnetic radiation, a
- control circuitry (5) for determining a current use mode of the electronic equipment (1) and for providing a control signal related to the use mode determined, and an
- impedance matching circuitry (3) being connected to the antenna (2) and having an impedance, which depends on the control signal.

2. An electronic equipment according to claim 1,
**characterised in**
**that** the electronic equipment (1) is formed by a mobile radio terminal.

3. An electronic equipment according to claim 1 or claim 2,
**characterised in**
**that** the impedance matching circuitry (3) comprises a circuit component with an electrically controllable impedance that affects the output impedance of the impedance matching circuitry.

4. An electronic equipment according to claim 3,
**characterised in**
**that** a PIN-diode forms the circuitry component with an electrically controllable impedance.

5. An electronic equipment according to one of the claims 1 to 3,
**characterised in**
**that** the impedance matching circuitry (3) contains a capacitive and/or inductive circuit element.

6. An electronic equipment according to one of the claims 1 to 5,
**characterised in**
**that** the control circuitry (5) comprises a position sensing device for sensing at least one position of a mechanically movable part of the electronic equipment.

7. An electronic equipment according to claim 6,
**characterised in**
**that** the position sensing device comprises a touchfree position sensor.

8. An electronic equipment according to claim 7,
**characterised in**
**that** the touchfree sensor comprises a hall generator.

9. An electronic equipment according to one of the claims 1 to 8,
**characterised in**
**that** the control circuitry (5) comprises an operation mode sensing device for sensing at least one operation mode of the electronic equipment.

10. An electronic equipment according to one of the claims 1 to 9,
**characterised in**
**that** an ASIC device forms at least part of the control circuitry (5).

11. An electronic equipment according to one of the claims 1 to 10,
**characterised in**
**that** the impedance matching circuitry (3) is arranged between a RF-circuitry (4) and the antenna (2).

12. An electronic equipment according to claim 11,
**characterised in**
**that** the output of the RF-circuitry (4) is formed by an antenna switch.

13. Method for matching the output impedance of an RF-circuitry (4) to an impedance of an antenna (2) comprising steps for:
- determining a current use mode of an electronic equipment (1) comprising the antenna (2),
- generating a control signal related to the current use mode detected, and
- modifying the impedance of the impedance matching circuitry (3) based on the control signal.

14. Method according to claim 13,
**characterised in**
**that** the determination of a current use mode is derived from a reading of at least one sensor, which is adapted to sense an operational condition of the electronic equipment (1) distinct to others.

15. Method according to claim 13 or 14,
**characterised in**
**that** a first use mode is formed by the electronic equipment (1) being in stand-by mode.

16. Method according to one of the claims 13 to 15,
**characterised in**
**that** a second use mode is formed by the electronic equipment (1) being in call mode.

17. Method according to one of the claims 13 to 16,
**characterised in**
**that** a third use mode is formed by the electronic equipment (1) being in a mode for a transfer of non-speech data.

18. Method according to claim 16 or 17,
**characterised in that** it is further determined if the electronic equipment is currently receiving or transmitting data.
